# EUROPEAN PATENT APPLICATION

(11) **EP 3 243 850 A1**
(43) Date of publication of application: **15.11.2017**
(21) Application number: 17163688.9
(22) Date of filing: 05.10.2012
(51) Int. Cl.: C08F 14/18, C08F 2/18

(54) **AQUEOUS SUSPENSION POLYMERIZATION OF 2,3,3,3-TETRAFLUOROPROPENE**

(30) Priority: 05.10.2011 US 201161543714 P; 04.10.2012 US 201213645437; 04.10.2012 US 201213645444
(62) Divisional of application: 12837790.0
(71) Applicant: Honeywell International Inc., Morris Plains, NJ 07950 (US)
(72) Inventor: LU, Changqing, New York 14210 (US); POSS, Andrew J., Kenmore New York 14217 (US); NALEWAJED, David, West Seneca New York 14224 (US); CANTLON, Cheryl, Clarence Center New York 14032 (US); SINGH, Rajiv R., Getzville New York 14068 (US)
(74) Representative: Crooks, Elizabeth Caroline

(57) **Abstract**

The present invention relates to a method of producing polymers of 2,3,3,3-tetrafluoropropene (1234yf) by aqueous suspension polymerization in the presence of a radical initiator.

## Description

### CROSS REFERENCE TO RELATED APPLICATIONS

The present application also claims priority to U.S. Provisional Application Ser. No. 61/543,714, filed on October 5, 2011, the contents of which are incorporated herein by reference in their entirety.

Also incorporated herein by reference in its entirety is US Application Ser. No. 13/645,444, filed on October 4, 2012, and having Applicant Attorney Docket No. H0033369-4640.

### FIELD OF THE INVENTION

The present invention generally relates to processes for making fluoroolefin polymers, particularly homopolymers and heteropolymers utilizing 2,3,3,3-tetrafluoropropene (CF₃CF=CH₂, 1234yf, or HFO-1234yf) as a fluoroolefin monomer.

### BACKGROUND OF THE INVENTION

There have been reported polymerization methods to make 2,3,3,3-tetrafluoropropene homopolymers and heteropolymers, such as copolymers and terpolymers.

U.S. Patent Nos. 2,970,988 and 3,085,996 disclose the aqueous emulsion polymerization method to make 2,3,3,3-tetrafluoropropene homopolymer and copolymers with a variety of other monomers, such as vinylidene fluoride, trifluoroethylene, and chlorotrifluoroethylene.

The polymerization of 2,3,3,3-tetrafluoropropene at autogenous pressure under radiation from ⁶⁰Co is described in Dokl . Akad. Nauk SSSR (1963) 149, 230.

The homopolymerization of 2,3,3,3-tetrafluoropropene and its copolymerization with TFE at high pressure under radiation from ⁶⁰Co are described in Polymer Sci. A: Polym. Chem. (1971) 9, 1993-2007.

U.S. Patent No. 3,240,825 discloses the homotelomerization of 2,3,3,3-tetrafluoropropene with various halogen-containing alkanes by thermal initiation at 150-200 °C.

U.S. Patent Publication Nos. 2008/0153977 and 2008/0153978, and U.S. Patent No. 8,163,858 disclose aqueous emulsion polymerization and aqueous suspension polymerization to make 2,3,3,3-tetrafluoropropene homopolymer, copolymers, and terpolymers with other monomers, such as vinylidene fluoride, chlorotrifluoroethylene, and hexafluoropropylene.

U.S. Patent Publication No. 201110097529 discloses aqueous emulsion polymerization to make copolymers of 2,3,3,3-tetrafluoropropene and vinylidene fluoride.

International Publication No. WO 201111226b1 discloses emulsion polymerization to make 2,3,3,3-tetrafluoropropene homopolymer.

International Publication No. WO 2012/125788 discloses a method to synthesize 2,3,3,3-tetrafluoropropene/vinylidene fluoride copolymers using non-fluorinated surfactants in an emulsion process.

All of the above mentioned patent documents and literature publications are incorporated herein by reference in their entirety.

Although several types of polymerization methods to make 2,3,3,3-tetrafluoropropene homopolymers and heteropolymers have been described in the above patent and literature publications, applicants have come to appreciate that these polymerization methods have undesirable aspects or limitations, and/or that the polymers produced thereby can be formed with different and/or improved properties.

In view of applicants' recognition of deficiencies in the above-noted polymers and/or polymerization methods, , applicant's have come to appreciate a need to develop improved processes for making 2,3,3,3-tetrafluoropropene homopolymers and heteropolymers and for polymers of 2,3,3,3-tetrafluoropropene having different and/or improved properties for uses in various applications.

### SUMMARY

The present invention relates, generally, to methods of producing polymerized 2,3,3,3-tetrafluoropropene (poly-1234yf). As used herein, the term "poly-1234yf" or "HFO-1234yf polymer" is intended to be understood in its broad sense to include both homopolymers and heteropolymers (including copolymers and terpolymers) formed at least in part from 2,3,3,3-tetrafluoropropene. Applicants have surprisingly and unexpectedly found that the initiators, catalysts, co-catalysts and/or processes identified herein permit the production of polymers with advantageous properties, including but necessarily limited to, molecular weight properties and/or surface tension, particularly, though not exclusively, with respect to coating applications and other uses identified herein. In certain preferred aspects, polymers produced in accordance with the present invention exhibit a surface tension of below 30 mN/m and in further preferred aspects a surface tension between about 15 mN/m and about 30 mN/m.

In one aspect, the present invention relates to a process for producing a poly-1234yf by polymerizing one or more monomers comprising 2,3,3,3-tetrafluoropropene in an aqueous emulsion solution and in the presence of at least one radical initiator. The radical initiator preferably comprises one or more compounds that provide free radical building blocks for 1234yf polymerization. In one preferred aspect, the radical initiator is a persulfate compound or salt thereof. In certain preferred aspects, the persulfate is selected from the group (NH₄)₂S₂O₈, K₂S₂O₈, Na₂S₂O₈, Fe₂(S₂O₈)₃, (NH₄)₂S₂O₈/Na₂S₂O₅, (NH₄)₂S₂O₈/FeSO₄, (NH₄)₂S₂O₈/Na₂S₂O₅/FeSO₄, and the like, as well as combinations of any two or more of these. Preferred aqueous emulsion solutions include one or a combination of degassed deionized water and one or more buffer compounds and include one or more emulsifiers.

In certain embodiments, the present invention relates to a process for producing poly-1234yf by polymerizing one or more monomers comprising 2,3,3,3-tetrafluoropropene in an aqueous suspension and in the presence of at least one radical initiator. Preferred radical initiators comprise at least one compound that provides free radical building blocks for 1234yf polymerization. In one preferred aspect, the radical initiators are selected from one or more of a persulfate, a nitrile or carbonitrile, an alkanoic acid, a peroxide or hydroperoxide, or a carbonate or peroxycarbonate. In certain preferred embodiments, such catalysts are selected from the group (NH₄)₂S₂O₈, K₂S₂O₈, Na₂S₂O₈, Fe₂(S₂O₈)₃. (NH₄)₂S₂O₈/Na₂S₂O₅, (NH₄)₂S₂O₈/FeSO₄, (NH₄)₂S₂O₈Na₂S₂O₅FeSO₄, (NH₄)₂S₂O₈/CuCl_{2/}Na₂S₂O₅, 2,2' -azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert*-butylperoxy 2-ethylhexyl carbonate, diethyl peroxydicarbonate, di-*n*-propyl peroxydicarbonate, and the like, and any combination of two or more of these. Preferred aqueous suspensions include one or a combination of degassed deionized water and one or more buffer compounds and, optionally, includes one or more suspension stabilizers.

In certain embodiments, the present invention relates to a process for producing poly-1234yf by polymerizing one or more monomers comprising 2,3,3,3-tetrafluoropropene in the presence of a solvent and one or more of a radical initiator, ionic initiator and/or catalyst. The solvent in preferred embodiments is selected from the group CF₂ClCFCl₂, CF₃CH₂CF₂CH₃, CF₃(CF₂)₄CF₂H, (C₂H₅)₂O, CH₃CN, THF, methyl ethyl ketone, benzene, toluene, and the like, as well as combinations thereof. Ionic liquids, such as 1-butyl-3-methylimidazolium bis(trifluoromethylsulfonyl) imide, or the like, may be also used as a solvent in certain embodiments. In certain embodiments, the 2,3,3,3-tetrafluoropropene monomer may be used also as a solvent.

In one preferred aspect of the solvent polymerization aspects of invention, the radical initiators are selected from one or more of a nitrile or carbonitrile, an alkanoic acid, a peroxide or hydroperoxide, or a carbonate or peroxycarbonate. In certain preferred embodiments, the radical initiator is selected from the group 2,2'-azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert*-butylperoxy 2-ethylhexyl carbonate, diethyl peroxydicarbonate, di-*n*-propyl peroxydicarbonate, and the like, as well as combinations thereof.

In certain preferred embodiments of the solvent polymerization aspects of invention, the ionic initiators comprise at least one organolithium agent, metal halide, alkyl metal halide, metal amide, and/or metal cyanide. In certain preferred embodiments, the ionic initiators are selected from the group CH₃Li, *n*-C₄H₉Li, C₆H₅Li, C₆H₁₃Li, [(CH₃)₂CH]₂NLi, [(CH₃)₃Si]₂NLi, CH₃OLi, C₂H₅OLi, KNH₂, KCN, CH₃MgCl, C₆H₅MgBr, (CH₃)₂CHMgCl, SnCl₄, AlCl₃, BF₃, TiCl₄, and the like, as well as combinations thereof.

In certain preferred embodiments of the solvent polymerization aspects of invention, the catalyst comprises a single-site or multiple-site catalyst and optionally includes one or more co-catalysts. In certain preferred aspects, the catalyst is a titanium- or zirconium-containing catalyst, or particularly a titanium- or zirconium-containing halide catalyst, and the co-catalyst, if present, is an aluminum-containing or aluminum-oxide-containing co-catalyst. In certain preferred aspects, the catalyst is selected from the group TiCl₄, (η⁵-C₅H₅)₂TiCl₂, (η⁵-C₅H₅)₂ZrCl₂, *rac*-Et(Ind)₂ZrCl₂, and the like, as well as combinations thereof. In certain preferred embodiments TiCl₄ is complexed, preferably with co-catalyst (CH₃CH₂)₃Al; (η⁵-C₅H₅)₂TiCl₂ is complexed, preferably with co-catalyst (Al(CH₃)O)ₙ; (η⁵-C₅H₅)₂ZrCl₂ is complexed, preferably with co-catalyst (Al(CH₃)O)ₙ; and *rac*-Et(Ind)₂ZrCl₂ is complexed, preferably with co-catalyst (Al(CH₃)O)ₙ.

In certain embodiments, the present invention relates to a process for producing poly-1234yf by polymerizing one or more monomers comprising 2,3,3,3-tetrafluoropropene in a supercritical carbon dioxide medium and in the presence of a radical initiator and/or catalyst. The polymerization step such aspects may occur in the substantial absence of an aqueous emulsion solution or suspension, and/or in the substantial absence of a solvent.

In certain preferred embodiments of the supercritical carbon dioxide aspects of the invention, the radical initiators are selected from one or more of a nitrile or carbonitrile, an alkanoic acid, a peroxide or hydroperoxide, or a carbonate or peroxycarbonate. In certain preferred embodiments, the radical initiator is selected from the group 2,2'-azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert*-butylperoxy 2-ethylhexyl carbonate, diethyl peroxydicarbonate, di-*n*-propyl peroxydicarbonate, and the like, as well as combinations thereof.

The catalyst the supercritical carbon dioxide aspects of the invention preferably in certain embodiments comprises at least one single-site or multiple-site catalyst and optionally includes one or more co-catalysts. In certain preferred aspects, the catalyst is a titanium- or zirconium-containing catalyst, or particularly a titanium- or zirconium-containing halide, and the co-catalyst, if present, is an aluminum-containing or aluminum-oxide-containing compound. In certain preferred aspects, the catalyst is selected from the group TiCl₄, (η⁵-C₅H₅)₂TiCl₂, (η⁵-C₅H₅)₂ZrCl₂, *rac*-Et(Ind)₂ZrCl₂, and the like, as well as combinations thereof. In certain preferred embodiments, TiCl₄ is complexed, preferably with co-catalyst (CH₃CH₂)₃Al; (η⁵-C₅H₅)₂TiCl₂ is complexed with co-catalyst (Al(CH₃)O)ₙ; (η⁵-C₅H₅)₂ZrCl₂ is complexed with co-catalyst (Al(CH₃)O)ₙ; and *rac*-Et(Ind)₂ZrCl₂ is complexed with co-catalyst (Al(CH₃)O)ₙ.

In further embodiments, the present invention relates to a process for producing poly-1234yf by polymerizing one or more monomers comprising 2,3,3,3-tetrafluoropropene in the presence of a catalyst and a solvent. The solvent, in certain preferred embodiments of such aspects of the invention, is selected from the group CF₂ClCFCl_{2,} CF₃CH₂CF₂CH₃, CF₃(CF₂)₄CF₂H, (C₂H₅)₂O, CH₃CN, THF, methyl ethyl ketone, benzene, toluene, and the like, as well as combinations thereof. Ionic liquids, such as 1-butyl-3-methylimidazolium bis(trifluoromethylsulfonyl) imide, or the like, may be also used as a solvent in certain embodiments. In certain preferred embodiments, 2,3,3,3-tetrafluoropropene monomer acts as the solvent.

In certain embodiments of the catalyst/solvent aspects of the invention, the catalyst comprises at least one single-site or multiple-site catalyst and optionally includes one or more co-catalysts. In certain preferred aspects, the catalyst comprises a titanium- or zirconium-containing catalyst, or particularly a titanium- or zirconium-containing halide, and the co-catalyst, if present, comprises an aluminum-containing or aluminum-oxide-containing compound. In certain preferred aspects, the catalyst is selected from the group TiCl₄, (η⁵-C₅H₅)₂TiCl₂, (η⁵-C₅H₅)₂ZrCl₂, *rac*-Et(Ind)₂ZrCl₂, and the like, as well as combinations thereof. In certain preferred embodiments, TiCl₄ is complexed with co-catalyst (CH₃CH₂)₃Al; (η⁵-C₅H₅)₂TiCl₂ is complexed with co-catalyst (Al(CH₃)O)ₙ; (η⁵-C₅H₅)₂ZrCl₂ is complexed with co-catalyst (Al(CH₃)O)ₙ; and *rac*-Et(Ind)₂ZrCl₂ is complexed with co-catalyst (Al(CH₃)O)ₙ.

The polymers that can be produced in accordance with the present invention may be useful in a wide variety of applications, including in coating or barrier compositions including, but not limited to, thermoplastic coatings. Such polymers may also be used for alternative applications such as, but not limited to, sealants, gaskets, tubing, elastomers, waterproofing, photovoltaic materials, electrical materials, and the like.

Additional embodiments and advantages to the present invention will be readily apparent to one of skill in the art based on the disclosure provided herein.

### DETAILED DESCRIPTION OF THE INVENTION

The present invention relates, generally, to methods of producing polymerized 2,3,3,3-tetrafluoropropene (poly-1234yf) using one or a combination of the techniques provided herein. While not limited thereto, in certain preferred embodiments, such techniques include (1) emulsion polymerization; (2) suspension polymerization; (3) solution polymerization; (4) supercritical carbon dioxide polymerization; (5) transition metal catalyzed polymerization, (6) radiation or thermal polymerization; and combinations thereof. A wide array of initiators, catalysts, and solvents may be used in such polymerization processes in accordance with the teachings of the present invention, preferably including, but not limited to, (1) radical initiators; (2) ionic initiators; and/or (3) single-site and multiple-site catalysts with/without co-catalysts.

The polymer compositions of the present invention may be provided as a homopolymer of HFO-1234yf. In alternative embodiments, however, HFO-1234yf may be co-polymerized with one or more co-monomers, including in certain preferred embodiments one or more halogenated or non-halogenated co-monomers. Such halogenated comonomers, in certain preferred aspects, includes one or more olefin co-monomers represented by the formula: R¹R²C=CR³R⁴ wherein each of R¹, R², R³, and R⁴ is independently selected from hydrogen, chloro, fluoro, bromo, iodo, hydroxy, alkoxy, alkoxycarbonyl, acyl, cyano, linear, branched or cyclic alkyl of 1-6 carbon atoms optionally substituted by at least one fluorine, aryl of 1-6 carbon atoms optionally substituted by at least one halogen, with the proviso that at least one of the R¹, R², R³, and R⁴ groups is either a halogen or a halogen-containing group, and a mixture thereof. Examples of fluoroolefin co-monomers that may be preferred in certain embodiments include, but are not limited to CFH=CH₂, CF₂=CH₂, CF₂=CFH, CF₂=CF₂, CClF=CF₂, CBrF=CF₂, CF₃CH=CHF, CF₃CF=CF₂, CF₃CH=CF₂, *cis*-CF₃CF=CHF, *trans-*CF₃CF=CHF, CF₃CH=CH₂, CF₃CF=CH₂, CF₃CF₂CF=CF₂, CF₃CF₂CH=CF₂, CF₃CF₂CF=CHF, CF₃CF₂CH=CH₂, CF₃CF₂CF=CH₂, CF₃CF₂CF₂CF=CF₂, CF₃CF₂CF₂CH=CF₂, CF₃CF₂CF₂CF=CHF. CF₃CF₂CF₂CH=CH₂, CF₃CF₂CF₂CF=CH₂, CF₃CH=CHCF₃, CF₃CH=CFCF₃, CF₃CF=CFCF₃, HOCH₂CH=CHF, HOCH₂CH=CF₂, HOCH₂CF=CH₂, HOCH₂CF=CHF, HOCH₂CF=CF₂, HOCH₂CF=CH₂, CF₃CH=CHCl, CF₃CCl=CH₂, CF₃CCl=CHF, CF₃CCl=CF₂, CF₃CF=CHCl, CF₃CH=CFCl, (CF₃)₂C=CH₂, CF₃CF₂CF₂CF₂CH=CH₂, CF₃CF₂CF₂OCF=CF₂, CF₃OCF=CF₂, and mixtures thereof.

Additional non-limiting examples of fluorinated co-monomers preferably include α-trifluoromethylacrylate, vinyl ether of 4 to 24 carbon atoms substituted by at least one fluorine atom, vinyl carboxylate of 5-24 carbon atoms wherein the carboxylate is substituted by at least one fluorine, and perfluoroalkyl vinyl ether.

Non-limiting examples of non-halogenated co-monomers include alkene of 2-8 carbon atoms, acrylate or methacrylate ester of 4 to 24 carbon atoms, hydroxyethyl acrylate or methacrylate, hydroxypropyl acrylate or methacrylate, glycidyl acrylate or methacrylate, acrylonitrile, methacrylonitrile, vinyl ether of 4 to 24 carbon atoms optionally substituted by at least one hydroxy group, styrene, *alpha*-methyl styrene, *para-*methyl styrene, allyl alcohol, methallyl alcohol, vinyl acetate, vinyl carboxylate of 5-24 carbon atoms wherein the carboxylate is optionally substituted by at least one hydroxy group, methyl ethyl ketone, hydroxyethyl vinyl ether, hydroxybutyl vinyl ether, alkyl vinyl ether, and combinations thereof.

Non-limiting examples of the non-halogenated co-monomers include alkene of 2-8 carbon atoms, acrylate or methacrylate ester of 4 to 24 carbon atoms, acrylonitrile, methacrylonitrile, vinyl ether, styrene, *alpha-*methyl styrene, *para*-methyl styrene, allyl alcohol, methallyl alcohol, vinyl acetate, vinyl carboxylate of 5-24 carbon atoms, methyl ethyl ketone, hydroxyethyl vinyl ether, hydroxybutyl vinyl ether, alkyl vinyl ether, and a mixture thereof. Examples of the non-halogenated acrylic co-monomers include, but are not limited to, methyl acrylate, ethyl acrylate, propyl acrylate, butyl acrylate, 2-ethylhexyl acrylate, octyl acrylate, dodecyl acrylate, stearyl acrylate, benzyl acrylate, phenyl acrylate, methyl methacrylate, ethyl methacrylate, butyl methacrylate, 2-ethylhexyl methacrylate, and combinations thereof.

In embodiments wherein HFO-1234yf is co-polymerized with one or more co-monomers, HFO-1234yf may be provided in any amount within the teachings hereof depending on the particular aspects of the embodiment or application. In certain preferred embodiments, the HFO-1234yf monomer is present in an amount of from about 1 to about 99 weight percent, based on the total monomeric material in the reaction system, and the co-monomer(s), individually or collectively, being from about 1 to about 99 weight percent of the total monomeric material in the reaction system. In further preferred embodiments, HFO-1234yf is provided in an amount from about 10 to about 90 weight percent and the co-monomer(s), individually or collectively, may be between about 10 and 90 weight percen of the total monomeric material in the reaction system t. In even further embodiments, HFO-1234yf is provided in an amount between about 30 and about 70 weight percent and the co-monomer(s), individually or collectively, may be between about 30 and 70 weight percent of the total monomeric material in the reaction system. In even further embodiments, HFO-1234yf is provided in an amount at or greater than about 50 weight percent and the co-monomer(s), individually or collectively, may be in an amount at or less than about 50 weight percent of the total monomeric material in the reaction system.

### EMULSION POLYMERIZATION

In certain embodiments, the present invention relates to an emulsion polymerization method to produce poly-1234yf. While not limited thereto, the polymerization may be performed using at least one radical initiator provided in an aqueous emulsion solution.

The radical initiators may include any compound that provides free radical building blocks for 2,3,3,3-tetrafluoropropene polymerization. In one preferred aspect, the radical initiator is a persulfate compound or salt thereof. In certain preferred aspects, the persulfate initiators include, but are not limited to, one or a combination of (NH₄)₂S₂O₈. K₂S₂O₈, Na₂S₂O₈. Fe₂(S₂O₈)₃, (NH₄)₂S₂O₈/Na₂S₂O₅, (NH₄)S₂O₈/FeSO₄, (NH₄)₂S₂O₈/Na₂S₂O₅/FeSO₄, and the like, as well as combinations thereof.

The polymerization may be conducted in any aqueous emulsion solutions, particularly aqueous emulsion solutions that may be used in conjunction with a free radical polymerization reaction. Such aqueous emulsion solutions, in certain preferred embodiments, include, but are not limited to, one or a combination of degassed deionized water, buffer compounds (such as, but not limited to, Na₂HPO₄/NaH₂PO₄) and an emulsifier (such as, but not limited to, C₇F₁₅CO₂NH₄, C₄F₉SO₃K, CH₃(CH₂)₁₁OSO₃Na, C₁₂H₂₅C₆H₄SO₃Na, C₉H₁₉C₆H₄O(C₂H₄O)₁₀H, or the like).

The reaction is typically carried out at temperatures, pressures and a length of time sufficient to produce the desired fluoroolefin polymer and may be performed in any reactor known for such purposes, such as, but not limited to, an autoclave reactor.

In one non-limiting aspect, the reaction is carried out at temperatures in the range of from about -30 °C to about 150 °C, more preferably in certain embodiments from about 10 °C to about 90 °C, and at pressures in the range of from about 20 psig to about 1,000 psig, more preferably in certain embodiments from about 50 psig to about 800 psig. The length of the reaction may be any length of time to achieve the desired level of polymerization. In certain non-limiting embodiments, it may be between about 8 hours and about 720 hours. One of skill in the art will appreciate that such conditions may be modified or varied based upon the desired conversion rate, amount of product, and/or molecular weight of the resulting polymers in view of the teachings contained herein.

The respective amounts of the 2,3,3,3-tetrafluoropropene monomer and/or amounts of initiators also may be provided to control the conversion rate of the polymer produced and/or the molecular weight of the polymer produced. In certain preferred embodiments, the radical initiator is provided at a concentration of less than 10 weight percent, less than 5 weight percent, or less than 1 weight percent, based on the weight of the total monomers. Though not limited thereto, the aqueous emulsion solution may be provided from about 50 weight percent to about 150 weight percent, based on the weight of the total monomers.

In certain preferred embodiments, the preferred foregoing process aspects of the invention can be advantageous, at least in part, because it they can provide the ability to produce poly-1234yf where the molecular weight may be controlled and adapted to produce both low and high molecular weight polymers. Such polymers may be useful in coating or barrier compositions including, but not limited to, thermoplastic coatings. Such polymers may also be used for alternative applications such as, but not limited to, sealants, gaskets, tubing, elastomers, waterproofing, photovoltaic materials, electrical materials, and the like.

### SUSPENSION POLYMERIZATION

In another embodiment, the process of the present invention includes a suspension polymerization method. Such a method uses an aqueous solution and at least one radical initiator and, optionally, a suspension stabilizer to produce a poly-1234yf suspension.

The radical initiators may include any compound that provides free radical building blocks for 1234yf polymerization. In one preferred aspect, the radical initiators are selected from one or more of a persulfate, a nitrile or carbonitrile, an alkanoic acid, a peroxide or hydroperoxide, or a carbonate or peroxycarbonate. In certain preferred embodiments, such radical initiators may include, but are not limited to, one or a combination of (NH₄)₂S₂O₈, K₂S₂O₈, Na₂S₂O₈, Fe₂(S₂O₈)₃, (NH₄)₂S₂O₈/Na₂S₂O₅, (NH₄)₂S₂O₈/FeSO₄, (NH₄)₂S₂O₈/Na₂S₂O₅/FeSO₄, (NH₄)₂S₂O₈/CuCl₂/Na₂S₂O₅, 2,2'-azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert-*butylperoxy 2-ethylhexyl carbonate, diethyl peroxydicarbonate, di-*n*-propyl peroxydicarbonate, and the like.

Although not necessarily limited to any theory of operation, it is believed that in certain preferred embodiments the suspension stabilizers hinder the coalescence of the monomer droplets and the adhesion of the forming polymer beads. Such suspension stabilizers may include, but are not limited to, one or a combination of gelatin, methyl cellulose, polyacrylic acids and their salts, starch, poly(vinyl alcohol), poly(vinyl pyrolidone), sulfonated polystyrene, ZnO, alkaline earth phosphates, carbonates, silicates, and the like.

The polymerization may be conducted in any aqueous solutions, particularly aqueous solutions that may be used in conjunction with a free radical polymerization reaction. Such aqueous solutions may optionally include, but are not limited to, one or a combination of degassed deionized water, buffer compounds (such as, but not limited to, Na₂HPO₄/NaH₂PO₄). The aqueous solution may also, optionally, include one or more oxidant initiators to facilitate the polymerization process. Non-limiting examples of such initiators include, but are not limited to, CuCl₂, FeCl₃, and the like.

The reaction is typically carried out at temperatures, pressures and a length of time sufficient to produce the desired fluoroolefin polymer and may be performed in any reactor known for such purposes, such as, but not limited to, an autoclave reactor.

In one non-limiting aspect, the reaction is carried at temperature(s) in the range of from about -30 °C to about 150 °C, more preferably in certain embodiment from about 10 °C to about 90 °C, and at pressure(s) in the range of from about 20 psig to about 1,000 psig, or more preferably in certain embodiment from about 50 psig to about 800 psig. The length of the reaction may be any length of time to achieve the desired level of polymerization. In certain non-limiting embodiments, it may be between about 8 hours and about 720 hours. One of skill in the art will appreciate that such conditions may be modified or varied based upon the desired conversion rate, amount of product, and/or molecular weight of the resulting polymers.

Given the teachings contained herein, the respective amounts of the 2,3,3,3-tetrafluoropropene monomer, radical initiator, and suspension stabilizer may be provided so as to control the amount of the polymer produced, the molecular weight of the polymer produced, and the particle size of the polymer beads formed. Generally, though not exclusively, the radical initiator is provided at a concentration of less than 10 weight percent, less than 5 weight percent, or less than 1 weight percent, based on the weight of the total monomers. Generally, though not exclusively, the suspension stabilizer is provided at a concentration of less than 20 weight percent, based on the weight of the total monomers. Generally, though not exclusively, the reaction mixture has a volume ratio of monomer(s) to liquid phase of 0.1 to 0.5.

In certain preferred embodiments the suspension polymerization process of the present invention can be advantageous because the use of an emulsifier is avoided. The polymer in such embodiments is preferably obtained as beaded particles which can be purified by washing and filtration. Poly-1234yf polymers manufactured using such a method are useful for numerous commercial purposes, particularly, though not exclusively, in coating or barrier compositions including, but not limited to, thermoplastic coatings. Such polymers may also be used for alternative applications such as, but not limited to, sealants, gaskets, tubing, elastomers, waterproofing, photovoltaic materials, electrical materials, and the like.

### SOLUTION POLYMERIZATION

In another embodiment, the process of the present invention includes a solution polymerization method. Such a method uses a solvent and at least one of a radical initiator, an ionic initiator, or a single-site/multiple-site catalyst with or without a co-catalyst to produce a polymerization solution for 2,3,3,3-tetrafluoropropene. Solvents that may be used in such a reaction include any non-reactive solvent that dissolves reactants that may be used in the polymerization. Such solvents include, but are not limited to, one or a combination of CF₂ClCFCl₂, CF₃CH₂CF₂CH₃, CF₃(CF₂)₄CF₂H, (C₂H₅)₂O, CH₃CN, THF, methyl ethyl ketone, benzene, toluene, and the like. Ionic liquids, such as 1-butyl-3-methylimidazolium bis(trifluoromethylsulfonyl) imide, or the like, may be used as the solvent. In further embodiments, 2,3,3,3-tetrafluoropropene monomers act as the solvent.

The radical initiators may include any compound that provides free radical building blocks for 2,3,3,3-tetrafluoropropene polymerization. In one preferred aspect, the radical initiators are selected from one or more of a nitrile or carbonitrile, an alkanoic acid, a peroxide or hydroperoxide, or a carbonate or peroxycarbonate. In certain preferred embodiments, the radical initiator include, but are not limited to, one or a combination of 2,2'-azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert*-butylperoxy 2-ethylhexyl carbonate, diethyl peroxydicarbonate, di-*n*-propyl peroxydicarbonate, and the like, as well as combinations thereof.

Ionic initiators may include any compound that provides one or more ionic species to initiate 2,3,3,3-tetrafluoropropene polymerization. In certain preferred embodiments, the ionic initiators may be an organolithium agent, a metal halide or alkyl metal halide, a metal amide, or a metal cyanide. In certain preferred embodiments, such initiators include, but are not limited to, one or a combination of CH₃Li, *n*-C₄H₉Li, C₆H₅Li, C₆H₁₃Li, [(CH₃)₂CH]₂NLi, [(CH₃)₃Si]₂NLi, CH₃OLi, C₂H₅OLi, KNH₂, KCN, CH₃MgCl, C₆H₅MgBr, (CH₃)₂CHMgCl, SnCl₄, AlCl₃, BF₃, TiCl₄, and the like.

Single-site or multiple-site catalysts may include any such catalysts that may be used to catalyze the polymerization process, along with, where applicable, co-catalysts used for such purposes. In certain preferred aspects, the catalyst is a titanium- or zirconium-containing catalyst, or particularly a titanium- or zirconium-containing halide, and the co-catalyst, if present, is an aluminum-containing or aluminum-oxide-containing compound. Non-limiting examples of such catalysts include, but are not limited to, one or a combination of TiCl₄ which may be complexed with (CH₃CH₂)₃Al; (η⁵-C₅H₅)₂TiCl₂ which may be complexed with (Al(CH3)O)ₙ; (η⁵-C₅H₅)₂ZrCl₂ which may be complexed with (Al(CH₃)O)ₙ; *rac*-Et(Ind)₂ZrCl₂ which may be complexed with (Al(CH₃)O)ₙ, and the like.

The reaction is typically carried out at temperatures, pressures and a length of time sufficient to produce the desired fluoroolefin polymer and may be performed in any reactor known for such purposes, such as, but not limited to, an autoclave reactor.

In one non-limiting aspect, the reaction is carried out at temperature(s) in the range of from about -50°C to about 200 °C, more preferably in certain embodiments from about 30 °C to about 150 °C, and at pressure(s) in the range of from about 20 psig to about 2,000 psig, more preferably in certain embodiments from about 50 psig to about 1,500 psig. The length of the reaction may be any length of time to achieve the desired level of polymerization. In certain non-limiting embodiments, it may be between about 8 hours and about 240 hours. One of skill in the art will appreciate that such conditions may be modified or varied based upon the desired conversion rate, amount of product, and/or molecular weight of the resulting polymers in view of the teachings contained herein.

The respective amounts of the 2,3,3,3-tetrafluoropropene monomer, radical initiator, ionic initiator, and/or catalyst may be provided so as to control the amount of the polymer produced and/or the molecular weight of the polymer produced. In certa preferred embodiments, the radical initiator or ionic initiator is provided at a concentration of less than 10 weight percent, less than 5 weight percent, or less than 1 weight percent, based on the weight of the total monomers. The catalyst and co-catalyst may be provided in any amount less than 20% by weight, based on the total weight of the reactants. The solvent may be provided in an amount from about 50 weight percent to about 150 weight percent, based on the total weight of the reactants.

In certain preferred embodiments, the preferred foregoing process can be advantageous, at least in part, because the use of a solvent, including 2,3,3,3-tetrafluoropropene, avoids the need for an aqueous solution with buffers, surfactants or stabilizers typically used. Poly-1234yf polymers manufactured using such a method are useful for numerous commercial purposes, particularly, though not exclusively, in coating or barrier compositions including, but not limited to, thermoplastic coatings. Such polymers may also be used for alternative applications such as, but not limited to, sealants, gaskets, tubing, elastomers, waterproofing, photovoltaic materials, electrical materials, and the like.

### SUPERCRITICAL CARBON DIOXIDE POLYMERIZATION

In another embodiment, the process of the present invention includes a supercritical carbon dioxide polymerization method for polymerizing 2,3,3,3-tetrafluoropropene. Such a method uses carbon dioxide as a medium with at least one radial initiator and/or catalyst to produce substantially pure poly-1234yf. The reaction is preferably, though not exclusively, performed in the substantial absence of an emulsifier, dispersant, stabilizer, or a solvent.

The radical initiators may include any compound that provides free radical building blocks for 2,3,3,3-tetrafluoropropene polymerization. In one preferred aspect, the radical initiators are selected from one or more of a nitrile or carbonitrile, an alkanoic acid, a peroxide or hydroperoxide, or a carbonate or peroxycarbonate. In certain preferred embodiments, the radical initiator may include, but is not limited to, one or a combination of 2,2'-azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert*-butylperoxy 2-ethylhexyl carbonate, diethyl peroxydicarbonate, di-*n*-propyl peroxydicarbonate, or the like.

Single-site or multiple-site catalysts may include any such catalysts that may be used to catalyze the polymerization process, along with, where applicable, co-catalysts used for such purposes. In certain preferred aspects, the catalyst is a titanium- or zirconium-containing catalyst, or particularly a titanium- or zirconium-containing halide, and the co-catalyst, if present, is an aluminum-containing or aluminum-oxide-containing compound. In certain preferred aspects, such catalysts include, but are not limited to, one or a combination of TiCl₄ which may be complexed with (CH₃CH₂)₃Al; (η⁵-C₅H₅)₂TiCl₂ which may be complexed with (Al(CH₃)O)ₙ; (η⁵-C₅H₅)₂ZrCl₂ which may be complexed with (Al(CH3)O)ₙ; *rac*-Et(Ind)₂ZrCl₂ which may be complexed with (Al(CH₃)O)ₙ, and the like.

The reaction is typically carried out at temperatures, pressures and a length of time sufficient to produce the desired fluoroolefin polymer and may be performed in any reactor known for such purposes, such as, but not limited to, a high pressure autoclave reactor.

In one non-limiting aspect, the reaction is carried out at temperature(s) in the range of from about 32 °C to about 200 °C, more preferably in certain embodiments from about 50 °C to about 150 °C, and at pressure(s) in the range of from about 1,100 psig to about 10,000 psig, more preferably in certain embodiments from about 3,000 psig to about 6,000 psig. The length of the reaction may be any length of time to achieve the desired level of polymerization. In certain non-limiting embodiments, it may be between about 8 hours and about 200 hours. One of skill in the art will appreciate that such conditions may be modified or varied based upon the desired conversion rate, amount of product, and/or molecular weight of the resulting polymers in view of the teachings contained herein.

The respective amounts of the 1234yf monomer, radical initiator, or catalyst may be provided so as to control the amount of the polymer produced and/or the molecular weight of the polymer produced. In certain preferred embodiments, the radical initiator is provided at a concentration of less than 10 weight percent, less than 5 weight percent, or less than 1 weight percent, based on the weight of the total monomers. The catalyst and co-catalyst may be provided in any amount less than 20% by weight, based on the total weight of the reactants.

In certain preferred embodiments, the preferred forgoing process aspects of the invention can be advantageous, at least in part, because it can provide an environmentally friendly polymerization method for producing poly-1234yf without the further purification of the polymer commonly used. Poly-1234yf polymers manufactured using such a method are useful for numerous commercial purposes, including, but not limited to, various coating applications, barrier compositions including, but not limited to, thermoplastic coatings. Such polymers may also be used for alternative applications such as, but not limited to, sealants, gaskets, tubing, elastomers, waterproofing, photovoltaic materials, electrical materials, and the like.

### TRANSITION METAL CATALYZED POLYMERIZATION

In another embodiment, the process of the present invention includes a transition metal catalyzed polymerization method for polymerizing 2,3,3,3-tetrafluoropropene. Such a method uses at least one single-site or multiple-site catalyst with a co-catalyst and at least one solvent.

Solvents that may be used in such a reaction include any non-reactive solvent that dissolves or suspends reactants that may be used in the polymerization. Such solvents may include, but are not limited to, one or a combination of CF₂ClCFCl₂, CF₃CH₂CF₂CH₃, CF₃(CF₂)₄CF₂H, (C₂H₅)₂O, CH₃CN, THF, methyl ethyl ketone, benzene, toluene, and the like. In further embodiments, 2,3,3,3-tetrafluoropropene monomers act as the solvent.

Single-site or multiple-site catalysts may include any such catalysts that may be used to catalyze the polymerization process, along with, where applicable, co-catalysts used for such purposes. In certain preferred aspects, the catalyst is a titanium- or zirconium-containing catalyst, or particularly a titanium- or zirconium-containing halide, and the co-catalyst, if present, is an aluminum-containing or aluminum-oxide-containing compound. In certain preferred aspects, examples of such catalysts include, but are not limited to, one or a combination of TiCl₄ which may be complexed with (CH₃CH₂)₃Al; (η⁵-C₅H₅)₂TiCl₂ which may be complexed with (Al(CH₃)O)ₙ; (η⁵-C₅H₅)₂ZrCl₂ which may be complexed with (Al(CH₃O)ₙ; *rac*-Et(Ind)₂ZrCl₂ which may be complexed with (Al(CH₃)O)ₙ, and the like.

The reaction is typically carried out at temperatures, pressures and a length of time sufficient to produce the desired fluoroolefin polymer and may be performed in any reactor known for such purposes, such as, but not limited to, an autoclave reactor.

In one non-limiting aspect, the reaction is carried out at temperature(s) in the range of from about -30 °C to about 200 °C, more preferably in certain embodiments from about 30 °C to about 150 °C, and at pressure(s) in the range of from about 20 psig to about 2,000 psig, more preferably in certain embodiments from about 50 psig to about 1,000 psig. The length of the reaction may be any length of time to achieve the desired level of polymerization. In certain non-limiting embodiment, it may be between about 8 hours and about 200 hours. One of skill in the art will appreciate that such conditions may be modified or varied based upon the desired conversion rate, amount of product, and/or molecular weight of the resulting polymers in view of the teachings contained herein.

The respective amounts of the 2,3,3,3-tetrafluoropropene monomer and catalyst may be provided so as to control the amount of the polymer produced and/or the molecular weight of the polymer produced. In certain preferred embodiments, the catalyst and co-catalyst may be provided in any amount less than 20% by weight, based on the total weight of the reactants. Though not limited thereto, the solvent may be provided in an amount from about 50 weight percent to about 150 weight percent, based on the total weight of the reactants.

In certain preferred embodiments, the preferred foregoing process aspects of the invention can be advantageous, at least in part, because it provides poly-1234yf polymers with the desired tacticity and having unique electrical and/or optical properties. Poly-1234yf polymers manufactured using such a method are useful for numerous commercial purposes, including, but not limited to, various coating applications, barrier compositions including, but not limited to, thermoplastic coatings. Such polymers may also be used for alternative applications such as, but not limited to, photovoltaic materials, electrical materials, optical materials, and the like.

### RADIATION INDUCED POLYMERIZATION

In another embodiment, the process of the present invention includes a radiation induced polymerization method. Such a method uses radiation to produce a polymerization product of or including for 2,3,3,3-tetrafluoropropene. More specifically, the polymerization reaction is carried out in the presence of a radiation source at a temperature, pressure and length of time sufficient to produce the desired fluoroolefin polymer. It may be performed in any reactor known for such purposes, such as, but not limited to, an autoclave reactor, glass tube, or the like.

The radiation source may be any one or more sources providing radiation that facilitates polymerization. In certain non-limiting aspects, the radiation source provides gamma rays to the reaction. In certain further embodiments, is provided from Cobalt-60. Radiation rates may vary in intensity and may be at any rate to facilitate or otherwise control polymerization. In certain non-limiting embodiments, the radiation may be provided at rates between about 500 rad/hr and about 5,000,000 rad/hr, between about 500 rad/hr and about 500,000 rad/hr, between about 500 rad/hr and about 50,000 rad/hr, or between about 500 rad/hr and about 5,000 rad/hr.

In further non-limiting aspects, the reaction is carried out at temperatures within the range of from about -30 °C to about 1500 °C, more preferably in certain embodiments from about 30 °C to about 150 °C, and at pressures within the range of from about 20 psig to about 2,000 psig, more preferably in certain embodiments from about 50 psig to about 1,500 psig. The length of the reaction may be any length of time to achieve the desired level of polymerization. In certain non-limiting embodiments, it may be between about 8 hours and about 240 hours. One of skill in the art will appreciate that such conditions and feed rates may be modified or varied based upon the desired conversion rate, amount of product, and/or molecular weight of the resulting polymers in view of the teachings contained herein. One of skill in the art will appreciate that the foregoing radiation reaction may be provided alone or in conjunction with one or more of the other reactions described herein.

One of skill in the art will appreciate that one or more of the foregoing may be adapted with additional polymerization or purification steps otherwise known in the art. To this end, the process can further include purifying the reaction product by precipitation or chromatography to obtain the product in substantially pure form. Polymerization methods may also be adapted using alternative or additional methods known and described in the art, such as, the methods described in U.S. Pat. Nos. 2,599,640; 2,919,263; 3,053,818; 3,240,757; 3,893,987; 5,200,480; 5,292,816; and 6,342,569.

### EXAMPLES

### Example 1 - Emulsion Polymerization

Into 100 mL of degassed deionized water with stirring and nitrogen bubbling, 2.125 g of Na₂HPO₄·7H₂O, 0.576 g of NaH₂PO₄, and 2.092 g of C₇F₁₅CO₂NH₄ are added. 0.354 g of (NH₄)₂S₂O₈ is then added into the above aqueous solution. The obtained aqueous solution is immediately transferred into an evacuated 300 mL autoclave reactor through a syringe. The reactor is cooled with dry ice and the aqueous solution inside is stirred at 100 rpm. When the internal temperature decreases to about -4 °C, 121.6 g of 2,3,3,3-tetrafluoropropene is transferred into the reactor. The dry ice cooling is removed. The reactor is slowly warmed up by air. Meanwhile the stir rate is increased to 500 rpm. The autoclave reactor is further slowly heated up to 60 °C.

After 48 hours, the heating is stopped. The stir rate is decreased to 100 rpm. At room temperature, the unreacted monomer is recovered. The polymerization mixture is filtered. The solid polymer precipitate (if any) is thoroughly washed with deionized water and dried under vacuum at 35 °C to dryness. The filtrate (latex) is coagulated with concentrated hydrochloric acid to precipitate the polymer out. The obtained polymer from the latex is thoroughly washed with deionized water and dried under vacuum at 35 °C to dryness. The obtained dry 2,3,3,3-tetrafluoropropene polymer is subjected to GPC, NMR, and DSC analysis.

### Example 2 - Suspension Polymerization

Into 100 mL of degassed deionized water with stirring, 2.112 g of Na₂HPO₄·7H₂O, 0.574 g of NaH₂PO₄, and 2.061 g ofpoly(vinyl alcohol) are added. 0.151 g of (NH₄)₂S₂O₈ and 0.016 g of CuCl₂ are added into the above aqueous solution with stirring and nitrogen bubbling. The obtained aqueous solution is immediately transferred into an evacuated 300 mL autoclave reactor through a syringe. The autoclave reactor is cooled with dry ice and the aqueous solution inside is slowly stirred. When the internal temperature decreases to about -4 °C, the transfer of a mixture containing 38.6 g of 2,3,3,3-tetrafluoropropene and 16.2 g of vinylidene fluoride into the autoclave reactor is started. At the end of the transfer, the internal temperature is below about -5 °C. The dry ice cooling is removed. The autoclave reactor is slowly warmed up by air. The aqueous solution inside is stirred at 300 rpm.

When the internal temperature increases to about 10 °C, 0.195 g of Na₂S₂O₅ dissolved in 5 mL degassed deionized water is pumped into the autoclave reactor. The stir rate is increased to 500 rpm. The autoclave reactor is slowly heated up to 35 °C.

After 24 hours, the heating is stopped. The stir rate is decreased to 100 rpm. The autoclave reactor is cooled down. At room temperature, the unreacted monomers are recovered. The polymerization mixture is filtered. The solid polymer is thoroughly washed with deionized water and dried under vacuum at 35 °C to dryness. The obtained dry 2,3,3,3-tetrafluoropropene/vinylidene fluoride copolymer is subjected to GPC, NMR, and DSC analysis.

### Example 3 - Solution Polymerization

Into a 300 mL stainless steel cylinder reactor, 10 g of glass beads and 100 mL of CF₂ClCFCl₂ are added. 1.508 g of *t*-butylperoxy 2-ethylhexyl carbonate is added into the reactor. The reactor is closed and cooled with liquid nitrogen. The reactor is evacuated under vacuum. 76.7 g of 2,3,3,3-tetrafluoropropene is transferred into the reactor. The liquid nitrogen cooling is removed. The reactor is slowly warmed up by air. The reactor is placed on a shaker and slowly heated up to 70 °C.

After 48 hours, the heating is stopped. The reactor is cooled down by air. At room temperature, the unreacted monomer is recovered. The reaction mixture is poured into a 250 mL round bottom flask. After evaporation of the solvent, the solid polymer is dried under vacuum at 35 °C to dryness. The obtained dry 2,3,3,3-tetrafluoropropene polymer is subjected to GPC, NMR, and DSC analysis.

### Example 4 - Supercritical Carbon Dioxide Polymerization

Into a 500 mL stainless steel high pressure reactor, 1.036 g of 2,2'-azobis(2-methylpropionitrile) (AIBN) is added. The reactor is sealed and then evacuated under vacuum. The lower part of the reactor is cooled with dry ice. When the internal temperature decreases to about -4 °C, 102.8 g of 2,3,3,3-tetrafluoropropene is transferred into the reactor. The dry ice cooling is then removed. The reactor is slowly warmed up. Meanwhile the mixture inside is slowly stirred. When the internal temperature increases to about 10 °C, the pressurized CO₂ is added through a pump until about one-third of the reactor volume. The reactor is then slowly heated up to 65 °C. Meanwhile, the stir rate is increased to 300 rpm. The desired system pressure is conditioned by pumping the additional pressurized CO₂ into the reactor.

After 48 hours, the heating is stopped. The lower part of the reactor is cooled down with dry ice. The CO₂ in the reactor is slowly released. The polymer is collected, thoroughly washed with deionized water, and dried under vacuum at 35 °C to dryness. The obtained dry 2,3,3,3-tetrafluoropropene polymer is subjected to GPC, NMR, and DSC analysis.

### Example 5 - Transition Metal Catalyzed Polymerization

Into an evacuated 300 mL autoclave reactor cooled with dry ice, 80.0 mL of dry toluene and 82.6 g of 2,3,3,3-tetrafluoropropene are added respectively. The dry ice cooling is removed. The autocalve reactor was slowly warmed up to room temperature. 16.0 mL of toluene solution containing 1.403 g of methylaluminoxane (MAO) and 0.106 g of *rac*-ethylenebis(indenyl) zirconium dichloride (*rac*-Et(Ind)₂ZrCl₂) is injected into the autoclave reactor. The reaction mixture is stirred at 500 rpm. The autoclave reactor is slowly heated up to 65°C. After 24 hours, the heating is stopped. The autoclave reactor is cooled down to room temperature. 10 mL of methanol is injected into the autoclave reactor to terminate the polymerization. The unreacted monomer is recovered. The polymerization mixture is poured into 300 mL of methanol containing 10wt% of hydrochloric acid, and stirred overnight. The polymer is then thoroughly washed with deionized water and dried under vacuum at 35 °C to dryness.

The obtained dry 2.3.3,3-tetrafluoropropene polymer is subjected to GPC, NMR, DSC, and tacticity analysis.

### Example 6 - Radiation-induced Polymerization

Into an evacuated 30 mL thick-wall glass tube cooled with liquid nitrogen, 4.052 g of 2,3,3,3-tetrafluoropropene is transferred. The glass tube is sealed under vacuum and then slowly warmed up to room temperature. The charged glass tube is then slowly heated up to 60 °C and subjected to 1,500 rad/hr of radiation from an external ⁶⁰Co source. After 24 hours, the radiation and heating are stopped. The glass tube is cooled down to room temperature and further cooled with liquid nitrogen. The glass tube is cut and opened. The unreacted monomer is recovered. The obtained polymer is dried under vacuum at 35 °C to dryness.

The obtained dry 2,3,3,3-tetrafluoropropene polymer is subjected to GPC, NMR, and DSC analysis.

### Numbered Embodiments

The subject matter encompassed by the following numbered embodiments also forms part of the present invention, optionally in combination with the subject matter described above and/or defined in the claims.

### Numbered Embodiment 1

A process for producing a homopolymer or heteropolymer (including copolymer and terpolymer) of 2,3,3,3-tetrafluoropropene comprising:
polymerizing one or more monomers comprising 2,3,3,3-tetrafluoropropene in an aqueous emulsion solution and in the presence of at least one radical initiator selected from the group consisting of (NH₄)₂S₂O₈, K₂S₂O₈, Na₂S₂O₈, Fe₂(S₂O₈)₃, (NH₄)₂S₂O₈/Na₂S₂O₅, (NH₄)₂S_{O8}/FeSO₄, (NH₄)₂S₂O₈/Naa₂S₂O₅/Fe_{S}O₄, and combinations thereof.

### Numbered Embodiment 2

The process of numbered embodiment 1 wherein the aqueous emulsion solutions comprise one or a combination of degassed deionized water, one or more buffer compounds and one or more emulsifiers.

### Numbered Embodiment 3

A process for producing a homopolymer or heteropolymer (including copolymer and terpolymer) of 2,3,3,3-tetrafluoropropene comprising:
polymerizing one or more monomers comprising 2,3,3,3-tetrafluoropropene in an aqueous suspension and in the presence of at least one radical initiator.

### Numbered Embodiment 4

The process of numbered embodiment 3, wherein the radical initiator comprises one or more compounds selected from the group consisting of a nitrile or carbonitrile, an alkanoic acid, and combinations thereof.

### Numbered Embodiment 5

The process of numbered embodiment 3 wherein the radical initiators are selected from the group consisting of (NH₄)₂S₂O₈, K₂S₂O₈, Na₂S₂O₈, Fe₂(S₂O₈)₃, (NH₄)₂S₂O₈/Na₂S₂O₅, (NH₄)₂S₂O₈/FeSO₄, (NH₄)₂S₂O₈/Na₂S₂O₅/FeSO₄, (NH₄)₂S₂O₈/CuCl₂/Na₂S₂O₅, 2,2'-azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di*-tert-*butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert-*butylperoxy 2-ethylhexyl carbonate, diethyl peroxydicarbonate, di-*n*-propyl peroxydicarbonate, and combinations thereof.

### Numbered Embodiment 6

The process of numbered embodiment 3 wherein the aqueous suspensions comprise one or a combination of degassed deionized water, one or more buffer compounds and one or more suspension stabilizers.

### Numbered Embodiment 7

A process for producing a homopolymer or heteropolymer (including copolymer and terpolymer) of 2,3,3,3-tetrafluoropropene comprising:
polymerizing one or more monomers comprising 2,3,3,3-tetrafluoropropene in the presence of a solvent and one or more of a radical initiator, ionic initiator and/or catalyst.

### Numbered Embodiment 8

The process of numbered embodiment 7, wherein the solvent is selected from the group consisting of CF₂ClCFCl₂, CF₃CH₂CF₂CH₃, CF₃(CF₂)₄CF₂H, (C₂H₅)₂O, CH₃CN, THF, methyl ethyl ketone, benzene, toluene, 1-butyl-3-methylimidazolium bis(trifluoromethlsulfonyl) imide, and combinations thereof.

### Numbered Embodiment 9

The process of numbered embodiment 7, wherein the 2,3,3,3-tetrafluoropropene monomer acts as the solvent.

### Numbered Embodiment 10

The process of numbered embodiment 7, wherein the radical initiator comprises one or more compounds selected from the group consisting of a nitrile or carbonitrile, an alkanoic acid, and combinations thereof.

### Numbered Embodiment 11

The process of numbered embodiment 7, wherein the radical initiators are selected from the group consisting of 2,2'-azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert*-butylperoxy 2-ethylhexyl carbonate, diethyl peroxydicarbonate, di-n-propyl peroxydicarbonate, and combinations thereof

### Numbered Embodiment 12

The process of numbered embodiment 7, wherein the ionic initiators comprise one or more compounds selected from the group consisting of an organolithium agent, a metal halide or alkyl metal halide, a metal amide, a metal cyanide, and combinations thereof.

### Numbered Embodiment 13

The process of numbered embodiment 7, wherein the ionic initiators are selected from the group consisting of CH₃Li, *n*-C₄H₉Li, C₆H₅Li, C₆H₁₃Li, [(CH₃)₂CH]₂NLi, [(CH₃)₃Si]₂NLi, CH₃OLi, C₂H₅OLi, KNH₂, KCN, CH₃MgCl, C₆H₅MgBr, (CH₃)₂CHMgCl, SnCl₄, AlCl₃, BF₃, TiCl₄, and combinations thereof.

### Numbered Embodiment 14

The process of numbered embodiment 7, wherein the catalyst is a single-site or multiple-site catalyst and optionally includes one or more co-catalysts.

### Numbered Embodiment 15

The process of numbered embodiment 14, wherein the catalyst is a titanium- or zirconium-containing catalyst.

### Numbered Embodiment 16

The process of numbered embodiment 14, wherein the co-catalyst aluminum-containing or aluminum-oxide-containing compound.

### Numbered Embodiment 17

The process of numbered embodiment 14, wherein the catalyst is selected from the group consisting of TiCl₄, (η⁵-C₅H₅)₂TiCl₂, (η⁵-C₅H₅)₂ZrCl₂, *rac*-Et(Ind)₂ZrCl₂, and combinations thereof.

### Numbered Embodiment 18

The process of numbered embodiment 17, wherein TiCl₄ is complexed with co-catalyst (CH₃CH₂)₃Al.

### Numbered Embodiment 19

The process of numbered embodiment 17, wherein (η⁵-C₅H₅)₂TiCl₂ is complexed with co-catalyst (Al(CH₃)O)ₙ.

### Numbered Embodiment 20

The process of numbered embodiment 17, wherein (η⁵-C₅H₅)₂ZrCl₂ is complexed with co-catalyst (Al(CH₃)O)ₙ.

### Numbered Embodiment 21

The process of numbered embodiment 17, wherein *rac*-Et(Ind)₂ZrCl₂ is complexed with co-catalyst (Al(CH₃)O)ₙ.

### Numbered Embodiment 22

A process for producing a homopolymer or heteropolymer (including copolymer and terpolymer) of 2,3,3,3-tetrafluoropropene comprising:
polymerizing one or more monomers comprising 2,3,3,3-tetrafluoropropene in a supercritical carbon dioxide medium and in the presence of a radical initiator and/or catalyst.

### Numbered Embodiment 23

The process of numbered embodiment 22, wherein the polymerization step occurs in the substantial absence of an aqueous emulsion solution or aqueous suspension.

### Numbered Embodiment 24

The process of numbered embodiment 22, wherein the polymerization step occurs in the substantial absence of a solvent.

### Numbered Embodiment 25

The process of numbered embodiment 22, wherein the radical initiator comprises one or more compounds selected from the group consisting of a nitrile, a carbonitrile, an alkanoic acid, a peroxide, a hydroperoxide, a carbonate, a peroxycarbonate, and combinations thereof.

### Numbered Embodiment 26

The process of numbered embodiment 22, wherein the radical initiators are selected from the group consisting of 2,2'-azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert*-butylperoxy 2-ethylhexyl carbonate, diethyl peroxydicarbonate, di-*n*-propyl peroxydicarbonate, and combinations thereof

### Numbered Embodiment 27

The process of numbered embodiment 22, wherein the catalyst is a single-site or multiple-site catalyst and optionally includes one or more co-catalysts.

### Numbered Embodiment 28

The process of numbered embodiment 27, wherein the catalyst is a titanium- or zirconium-containing catalyst.

### Numbered Embodiment 29

The process of numbered embodiment 27, wherein the co-catalyst aluminum-containing or aluminum-oxide-containing compound.

### Numbered Embodiment 30

The process of numbered embodiment 27, wherein the catalyst is selected from the group consisting of TiCl₄, (η⁵-C₅H₅)₂TiCl₂, (η⁵-C₅H₅)₂ZrCl₂, *rac*-Et(Ind)₂ZrCl₂, and combinations thereof.

### Numbered Embodiment 31

The process of numbered embodiment 30, wherein TiCl₄ is complexed with co-catalyst (CH₃CH₂)₃Al.

### Numbered Embodiment 32

The process of numbered embodiment 30, wherein (η⁵-C₅H₅)₂ TiCl₂ is complexed with co-catalyst (Al(CH₃)O)ₙ.

### Numbered Embodiment 33

The process of numbered embodiment 30, wherein (η⁵-C₅H₅)₂ZrCl₂ is complexed with co-catalyst (Al(CH₃)O)ₙ.

### Numbered Embodiment 34

The process of numbered embodiment 30, wherein *rac*-Et(Ind)₂ZrCl₂ is complexed with co-catalyst (Al(CH₃)O)ₙ.

### Numbered Embodiment 35

A process for producing a homopolymer or heteropolymer (including copolymer and terpolymer) of 2,3,3,3-tetrafluoropropene comprising:
polymerizing one or more monomers comprising 2,3,3,3-tetrafluoropropene in the presence of a catalyst and a solvent.

### Numbered Embodiment 36

The process of numbered embodiment 35, wherein the solvent is selected from the group consisting of CF₂ClCFCl₂, CF₃CH₂CF₂CH₃, CF₃(CF₂)₄CF₂H, (C₂H₅)₂O, CH₃CN, THF, methyl ethyl ketone, benzene, toluene, 1-butyl-3-methylimidazolium bis(trifluoromethlsulfonyl) imide and combinations thereof.

### Numbered Embodiment 37

The process of numbered embodiment 35, wherein the 2,3,3,3-tetrafluoropropene monomer acts as the solvent.

### Numbered Embodiment 38

The process of numbered embodiment 35, wherein the catalyst is a single-site or multiple-site catalyst and optionally includes one or more co-catalysts.

### Numbered Embodiment 39

The process of numbered embodiment 38, wherein the catalyst is a titanium- or zirconium-containing catalyst.

### Numbered Embodiment 40

The process of numbered embodiment 38, wherein the co-catalyst aluminum-containing or aluminum-oxide-containing compound.

### Numbered Embodiment 41

The process of numbered embodiment 38, wherein the catalyst is selected from the group consisting of TiCl4, (η⁵-C₅H₅)₂TiCl₂, (η⁵-C₅H₅)₂ZrCl₂, *rac*-Et(Ind)₂ZrCl₂, and combinations thereof.

### Numbered Embodiment 42

The process of numbered embodiment 41, wherein TiCl₄ is complexed with co-catalyst (CH₃CH₂)₃Al.

### Numbered Embodiment 43

The process of numbered embodiment 41, wherein (η⁵-C₅H₅)₂TiCl₂ is complexed with co-catalyst (Al(CH₃)O)ₙ.

### Numbered Embodiment 44

The process of numbered embodiment 41, wherein (η⁵-C₅H₅)₂ZrCl₂ is complexed with co-catalyst (Al(CH₃)O)ₙ.

### Numbered Embodiment 45

The process of numbered embodiment 41, wherein *rac*-Et(Ind)₂ZrCl₂ is complexed with co-catalyst (Al(CH₃)O)ₙ.

## Claims

1. A process for producing a homopolymer or a heteropolymer of 2,3,3,3-tetrafluoropropene comprising:
polymerizing one or more monomers comprising 2,3,3,3-tetrafluoropropene in an aqueous suspension and in the presence of at least one radical initiator.

2. The process of claim 1 wherein the 2,3,3,3-tetrafluoropropene is co-polymerized with one or more co-monomers selected from the group consisting of:
CF₂=CH₂, CF₃H=CH₂, CF₂=CFH, CF₂=CF₂, CClF=CF₂, CBrF=CF₂, CF₃CH=CHF, CF₃CF=CF₂, CF₃CH=CF₂, cis-CF₃CF=CHF, trans-CF₃CF=CHF, CF₃CH=CH₂, CF₃CF=CH₂, CF₃CF₂CF=CF₂, CF₃CF₂CH=CF₂, CF₃CF₂CF=CHF, CF₃CF₂CH=CH₂, CF₃CF₂CF=CH₂, CF₃CF₂CF₂CF=CF₂, CF₃CF₂CF₂CH=CF₂, CF₃CF₂CF₂CF=CHF, CF₃CF₂CF₂CH=CH₂, CF₃CF₂CF₂CF=CH₂, CF₃CH=CHCF₃, CF₃CH=CFCF₃, CF₃CF=CFCF₃, HOCH₂CH=CHF, HOCH₂CH=CF₂, HOCH₂CF=CH₂, HOCH₂CF=CHF, HOCH₂CF=CF₂, HOCH₂CF=CH₂, CFCH=CHCl, CF₃CCl=CH₂, CF₃CCl=CHF, CF₃CCl=CF₂, CF₃CF=CHCl, CF₃CH=CFCl, (CF₃)₂C=CH₂, CF₃CF₂CF₂CF₂CHCH₂, CF₃CF₂CF₂OCF=CF₂, CF₃OCF=CF₂ and mixtures thereof.

3. The process of claim 1 or claim 2, wherein the radical initiator comprises one or more compounds selected from the group consisting of a nitrile or carbonitrile, an alkanoic acid, and combinations thereof.

4. The process of any one of claims 1 to 3 wherein the radical initiators are selected from the group consisting of (NH₄)₂S₂O₈, K₂S₂O₈, Na₂S₂O₈, Fe₂(S₂O₈)₃, (NH₄)₂S₂O₈/Na₂S₂O₅, (NH₄)₂S₂O₈/FeSO₄, (NH₄)₂S₂O₈/Na₂S₂O₅/FeSO₄, (NH₄)₂S₂O₈/CuCl₂/Na₂S₂O₅, 2,2'- azobis(2-methylpropionitrile) (AIBN), 1,1-diazene-1,2-diyldicyclohexanecarbonitrile (ABCN), 4-cyano-4-(2-cyano-5-hydroxy-5-oxopenta-2-yl)diazenylpentanoic acid, di-*tert*-butyl peroxide (*t*BuOO*t*Bu), benzoyl peroxide ((PhCOO)₂), *tert*-butyl peroxypivalate (TBPPi), 2-hydroperoxy-2-((2-hydroperoxybutan-2-yl)peroxy)butane (MEKP), *tert*-butylperoxy 2-ethylhexyl carbonate, diethyl peroxydicarbonate, di-*n*-propyl peroxydicarbonate, and combinations thereof.

5. The process of any preceding claim wherein the aqueous suspension comprises one or a combination of degassed deionized water, one or more buffer compounds and one or more suspension stabilizers.

6. The process of any preceding claim wherein the HFO-1234yf monomer is present in an amount of from 1 to 99 weight percent and the co-monomer is present in an amount of from 1 to 99 weight percent based on the total monomeric material in the reaction system or
wherein the HFO-1234yf monomer is present in an amount of from 10 to 90 weight percent and the co-monomer is present in an amount of from 10 to 90 weight percent based on the total monomeric material in the reaction system or
wherein the HFO-1234yf monomer is present in an amount of from 30 to 70 weight percent and the co-monomer is present in an amount of from 30 to 70 weight percent based on the total monomeric material in the reaction system or
wherein the HFO-1234yf monomer is present in an amount at or greater than 50 weight percent and the co-monomer is present in an amount of at or less than 50 weight percent based on the total monomeric material in the reaction system.

7. The process of claim 5 or claim 6 wherein the suspension stabiliser is gelatin, methyl cellulose, polyacrylic acids and their salts, starch, poly(vinyl alcohol), poly(vinyl pyrolidone), sulfonated polystyrene, ZnO, alkaline earth phosphates, carbonates or silicates.

8. The process of any one of claims 5 to 7 wherein the buffer compound is Na₂HPO₄/NaH₂PO₄.

9. The process of any preceding claim further comprising a oxidant initiator selected from CuCl₂ and FeCl₃.

10. The process of any preceding claim wherein the process is carried out in an autoclave reactor.

11. The process of any preceding claim wherein the process is carried out at a temperature in the range of from -30 °C to 150 °C, preferably 10 °C to 90 °C and a pressure in the range of from 20 psig to 1000 psig, preferably 50 to 800 psig.

12. The process of any preceding claim wherein the radical initiator is provided at a concentration of less than 10 weight percent or less than 5 weight percent or less than 1 weight percent.

13. The process of any one of claims 5 to 12 wherein the suspension initiator is provided at a concentration of less than 20 weight percent based on the weight of the total monomers.

14. The process of any preceding claim wherein the reaction mixture has a volume ratio of monomers to liquid phase of 0.1 to 0.5.
